# EUROPÄISCHE PATENTSCHRIFT

(11) **EP 4 254 257 B1**
(45) Veröffentlichungstag und Bekanntmachung des Hinweises auf die Patenterteilung: **16.10.2024**
(21) Anmeldenummer: 22166322.2
(22) Anmeldetag: 01.04.2022
(51) Int. Cl.: G06K 7/00

(54) **VORRICHTUNG ZUR ENTLADUNG ELEKTROSTATISCH GELADENER KARTEN**
DEVICE FOR DISCHARGING ELECTROSTATICALLY CHARGED CARDS
DISPOSITIF POUR DÉCHARGER DES CARTES CHARGÉES ÉLECTROSTATIQUEMENT

(43) Veröffentlichungstag der Anmeldung: 04.10.2023
(73) Patentinhaber: Riegraf, Maximilian, 71642 Ludwigsburg (DE)
(72) Erfinder: Riegraf, Maximilian, 71642 Ludwigsburg (DE)
(74) Vertreter: Limbeck, Achim

(56) Entgegenhaltungen:
- DE-A1- 102010 030 733
- KR-B1- 101 742 106
- US-A1- 2014 327 998

## Beschreibung

### Technisches Gebiet

Die vorliegende Erfindung betrifft eine Vorrichtung zur Entladung elektrostatisch geladener Karten gemäß dem Oberbegriff des Patentanspruchs 1. Als Karten seien nachstehend Chipkarten, Magnetstreifenkarten, Kombi- oder Hybridkarten sowie dergleichen ausgebildete Karten verstanden, die mittels eines Kartenlesegeräts auslesbar sind.

### Problemstellung und Stand der Technik

Es besteht ein häufig vorkommendes Problem bei der Verwendung von Kartenlesegeräten, insbesondere im Gesundheitssektor im Zusammenhang mit der Verwendung von elektronischen Gesundheitskarten (eGK), bei dem durch die elektrostatische Aufladung von Chipkarten durch das Einführen der Chipkarten in ein Kartenlesegerät Fehler auftreten bzw. das entsprechende System durch die Ableitung der elektrostatischen Ladung auf das Kartenlesegerät zum Absturz gebracht wird, so dass die Chipkarten nicht eingelesen werden kann. Das ganze System, also die Telematik-Infrastruktur, kann dabei abstürzen.

Es sind aus dem Stand der Technik bereits diverse Verfahren und Vorrichtungen zur Entladung elektrostatisch geladener Objekte bekannt, bei denen in der Regel geerdete und/oder zu erdende elektrisch leitende Entladeorgane (wie bspw. Kabel oder sonstige für die jeweilige Anwendung ausgestaltete Einrichtungen) eingesetzt werden, mittels derer elektrostatische Aufladungen an der Oberfläche von Objekten abgeleitet werden können.

Nachteilig bei den bekannten Verfahren und Vorrichtungen ist allerdings, dass diese nicht speziell zur Entladung von Karten geeignet und ausgebildet sind, zumal solche Vorrichtungen in der Regel aufwendig gestaltet, unhandlich oder schwer zugänglich sind.

Die DE 10 2010 030 733 A1 und die US 2014/327998 A1 offenbaren jeweils eine Vorrichtung, speziell ein Kartenlesegerät, mittels der elektrostatisch geladene Karten entladen werden können, mit jedenfalls einem geerdeten und/oder zu erdenden elektrisch leitenden Entladeorgan mittels dem elektrostatische Aufladungen an der Oberfläche einer Karte abgeleitet werden, wobei die Vorrichtung ein Gehäuse umfasst, an dem mindestens eine schlitzartig ausgebildete Öffnung zum Einschieben einer Karte entlang einer oder mehrerer durch die schlitzartige Öffnung vorgegebenen Schubebenen vorgesehen ist, wobei in einem oder mehreren Bereichen entlang der mindestens einen Schubebene das jedenfalls eine Entladeorgan angeordnet und/oder ausgerichtet ist, elektrostatische Aufladungen in einem oder mehreren Bereichen der Schubebene abzuleiten.

Die KR 101 742 106 81 offenbart ferner eine Vorrichtung zur Entladung elektrostatisch geladener Karten, bei der das Entladeorgan als mindestens ein plattenförmiger elektrisch leitfähiger Formkörper ausgebildet ist, der sich entlang der Schubebene erstreckt, wobei das Entladeorgan an oder innerhalb der Öffnung angeordnet ist und wobei die Öffnung zur formschlüssigen Aufnahme einer Karte gemäß ISO Standard 7810 10-1 Norm ausgebildet ist.

### Darstellung der Erfindung

Der vorliegenden Erfindung liegt die Aufgabe zugrunde, die vorgenannten Nachteile zu beseitigen und eine Vorrichtung zu schaffen, mittels der elektrostatische Aufladungen an der Oberfläche von Karten einfach und handlich vor oder während des Einführens der Karte in ein Kartenlesegerät abgeleitet werden kann, um wirksam auszuschließen, dass durch das Einführen der Karten in ein Kartenlesegerät aufgrund einer Ableitung elektrostatische Aufladungen Fehler am Kartenlesegerät auftreten. Dabei soll die erfindungsgemäße Vorrichtung ferner derart ausgebildet sein, dass keine aktive Elektronik, kein aktiver Stromfluss und keine Vorrichtungskomponente in den Kartenleser, also auch nicht in die Telematik-Infrastruktur oder in irgendwelche Daten eingreift, die Funktionsweise also rein passiv ausgebildet ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen angegeben.

Die erfindungsgemäße Vorrichtung, welche - wie nachstehend näher beschrieben - vorzugsweise als Aufsatzgerät für ein Kartenlesegerät ausgebildet ist, behebt bei der Verwendung von Karten wirksam die von den Krankenkassen ausgegebenen Fehler. Die erfindungsgemäße Vorrichtung sorgt mit ihrem Entladeorgan, welches vorzugsweise eine elektrisch leitende Oberfläche darstellt, dafür, dass die Ladung der Karte in einer bevorzugten Ausführungsform der Erfindung mithilfe eines Kabels und speziellem USB-Stecker auf die Erdung des USB-Steckers des Kartengeräts übergeht. Bei diesem Vorgang können alle Karten problemlos eingelesen werden. Da ein regulärer, handelsüblicher USB Stecker über alle seine Erdungs- bzw. Dateneigenschaften im Stecker selbst verfügt, ist dieser nach außen nicht leitfähig. Daher ist erfindungsgemäß vorteilhafterweise vorgesehen, dass die Erdungswirkung durch eine Verlötung eines (geeigneten) Kupferkabels nach vorheriger Anbringung an den äußeren Stecker selbst erzielt wird.

Darüber hinaus ist auch eine Ausführung der Erfindung in der Form möglich, dass eine passive Erdung auf einen Schutzkontaktstecker für jede handelsübliche Steckdose erreicht wird.

### Kurzbeschreibung der Zeichnungen

Weitere Ziele, Merkmale, Vorteile und Anwendungsmöglichkeiten der erfindungsgemäßen Vorrichtung ergeben sich aus der nachfolgenden Beschreibung eines Ausführungsbeispiels anhand der Zeichnungen.

In den Zeichnungen zeigen
Fig. 1 die erfindungsgemäße Vorrichtung in einer vorteilhaften Ausführungsform in perspektivischer Ansicht;

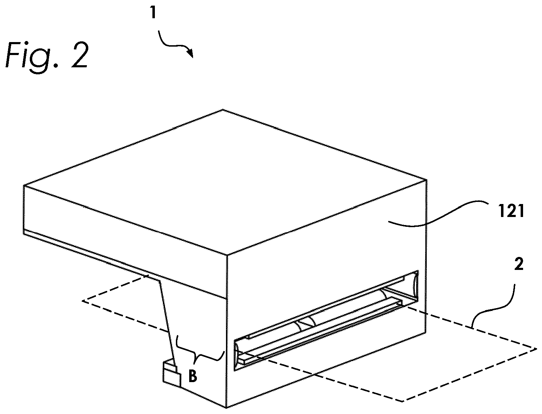

Fig. 2 die erfindungsgemäße Vorrichtung wie in Fig. 1 in einer weiteren perspektivischen Ansicht.

### Ausführung der Erfindung

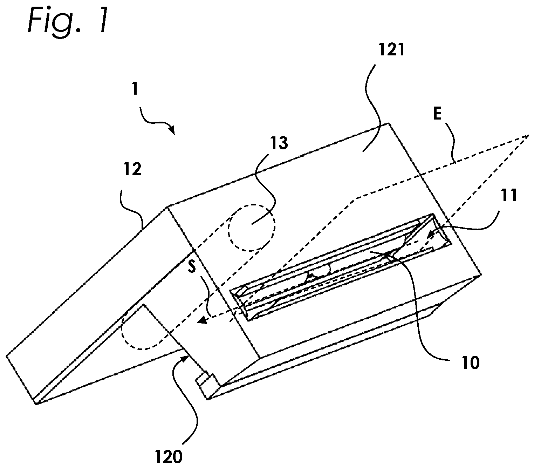

Wie aus Fig. 1 ersichtlich, umfasst die erfindungsgemäße Vorrichtung 1 zur Entladung elektrostatisch geladener Karten, jedenfalls einem geerdeten und/oder zu erdenden elektrisch leitenden Entladeorgan 10, mittels dem elektrostatische Aufladungen an der Oberfläche einer Karte 2 abgeleitet werden, wobei die Vorrichtung 1 ein Gehäuse 12 umfasst, an dem mindestens eine schlitzartig ausgebildete Öffnung 11 zum Einschieben einer Karte 2 entlang einer oder mehrerer durch die schlitzartige Öffnung 11 vorgegebenen Schubebenen E vorgesehen ist, wobei in einem oder mehreren Bereichen B entlang der mindestens einen Schubebene E das jedenfalls eine Entladeorgan 10 angeordnet und/oder ausgerichtet ist, elektrostatische Aufladungen in einem oder mehreren Bereichen B der Schubebene E abzuleiten, wobei die erfindungsgemäße Vorrichtung 1 ein Gehäuse 12 mit einer Oberseite 120 und einer Unterseite 121 umfasst und dadurch gekennzeichnet ist, dass sich die Öffnung 11 von der Oberseite 120 zur Unterseite erstreckt und die schlitzartige Öffnung 11 zum Durchschieben der Karte 2 von der Oberseite 120 zur Unterseite 121 des Gehäuses 12 entlang der Schubebene E ausgebildet ist.

Die schlitzartige Öffnung 11 kann aus einem festen Material und/oder aus einem oder mehreren flexiblen oder elastischen Materialien ausgebildet sein, welche zumindest teil- oder bereichsweise leitend ausgebildet sein sollten. Die Schubebene E wird durch die entsprechende Ausbildung und Anordnung der verwendeten Materialien vorgegeben, wobei durch das Material auch mehrere Schubebenen E gestaltet sein können, also die Karte durchaus auch in unterschiedlichen Winkeln in Bezug auf die Öffnung 11 bzw. die Vorrichtung 1 geführt werden kann.

Das Entladeorgan 10 ist vorteilhafterweise an oder innerhalb der Öffnung 11 angeordnet.

In einer besonders bevorzugten Ausführungsform der Erfindung erstreckt sich das Entladeorgan 10 über eine definierte Länge (vorzugsweise nahezu die gesamte Länge) sowie ein- oder zumindest bereichsweise beidseitig der Öffnung 11 in Schlitzrichtung S, wobei die beidseitige Variante gewährleistet, dass elektrostatische Entladung auf beiden Seiten einer Karte wirksam abgeleitet wird.

Das Entladeorgan 10 ist weiterhin vorzugsweise als mindestens ein plattenförmiger, elektrisch leitfähiger Formkörper ausgebildet, der sich über eine definierte Länge entlang der Schubebene E erstreckt.

Weiterhin ist es denkbar, dass das Entladeorgan 10 aus einer leitfähigen Beschichtung (bspw. ein elektrisch leitfähiger Lack) eines oder mehrerer Bereiche an oder in der Öffnung 11 an dem Gehäuse 12 ausgebildet ist, die sich über eine definierte Länge entlang der Schubebene E erstreckt.

In einer weiteren bevorzugten Ausführungsform der Erfindung ist mindestens ein Erdungskabel vorgesehen, welches mit dem Entladeorgan 10 verbunden oder verbindbar ist und welches im verbundenen Zustand vorzugsweise aus dem Gehäuse 12 oder an dem Gehäuse herausragt.

An dem äußeren Ende des Erdungskabels ist vorzugsweise ein Stecker angeordnet, der zur Ableitung der elektrostatischen Ladung in eine geeignete Buchse eingesteckt werden kann, wobei es ganz besonders bevorzugt ist, dass der Stecker ein USB-Stecker ist, welcher bspw. in das Kartenlesegerät einführbar ist. Der USB-Stecker ist dabei vorzugsweise (speziell) verkabelt und verlötet, und die Leitung wird vorteilhafterweise auf das die Außenhülle des Gehäuses 12 des USB-Slots geleitet.

Die Öffnung 11 ist vorzugsweise zur formschlüssigen Aufnahme einer Karte gemäß ISO Standard 7810 ID-1 Norm ausgebildet und ist mithin geeignet zur Aufnahme von Karten mit einer Abmessung von 85,60 mm × 53,98 mm.

Das Gehäuse 12 wird vorzugsweise im 3D-Druck gemäß einer geeigneten CAD-Vorgabe aus PLA aus nachwachsenden bzw. biologisch abbaubaren Rohstoffen hergestellt.

An dem Gehäuse erstreckt sich vorzugsweise in Schubrichtung S der Öffnung 11 mindestens eine Bohrung 13 zur Aufnahme des mindestens einen Erdungskabels.

### Liste der Bezugsziffern

- 1: Vorrichtung
- 2: Karte (Chipkarte)
- 10: Entladeorgan
- 11: Öffnung
- 12: Gehäuse
- 13: Bohrung
- 120: Oberseite des Gehäuses
- 121: Unterseits des Gehäuses
- B: Bereiche entlang der Schubebene
- E: Schubebene
- S: Schlitzrichtung

## Patentansprüche

1. Vorrichtung (1) zur Entladung elektrostatisch geladener Karten (2), mit jedenfalls einem geerdeten und/oder zu erdenden elektrisch leitenden Entladeorgan (10), mittels dem elektrostatische Aufladungen an der Oberfläche einer Karte (2) abgeleitet werden, wobei die Vorrichtung (1) ein Gehäuse (12) umfasst, an dem mindestens eine schlitzartig ausgebildete Öffnung (11) zum Einschieben einer Karte (2) entlang einer oder mehrerer durch die schlitzartige Öffnung (11) vorgegebenen Schubebenen (E) vorgesehen ist, wobei in einem oder mehreren Bereichen (B) entlang der mindestens einen Schubebene (E) das jedenfalls eine Entladeorgan (10) angeordnet und/oder ausgerichtet ist, elektrostatische Aufladungen in einem oder mehreren Bereichen (B) der Schubebene (E) abzuleiten, wobei die Vorrichtung ein Gehäuse (12) mit einer Oberseite (120) und einer Unterseite (121) umfasst,
**dadurch gekennzeichnet, dass**
sich die Öffnung (11) von der Oberseite (120) zur Unterseite erstreckt und die schlitzartige Öffnung (11) zum Durchschieben der Karte (2) von der Oberseite (120) zur Unterseite (121) des Gehäuses (12) entlang der Schubebene (E) ausgebildet ist.

2. Vorrichtung (1) nach Anspruch 1,
**dadurch gekennzeichnet, dass**
die Unterseite (121) um die Öffnung (11) herum zumindest bereichsweise flächig ausgebildet ist, um an der Einschuböffnung an einem Kartenlesegerät angeordnet zu werden.

3. Vorrichtung (1) nach Anspruch 1 oder 2,
**dadurch gekennzeichnet, dass**
sich an dem Gehäuse (12) in Schubrichtung (S) der Öffnung (11) mindestens eine Bohrung (13) zur Aufnahme des mindestens einen Erdungskabels erstreckt.

## Claims

1. Device (1) for discharging electrostatically charged cards (2), with at least one earthed and/or electrically conductive discharging member (10) to be earthed, by means of which electrostatic charges on the surface of a card (2) are discharged, the device (1) comprising a housing (12) on which at least one slot-like opening (11) is provided for inserting a card (2) along one or more thrust planes (E) predetermined by the slot-like opening (11), wherein in one or more regions (B) along the at least one thrust plane (E) the at least one discharging member (10) is arranged and/or aligned to discharge electrostatic charges in one or more regions (B) of the thrust plane (E), wherein the device comprises a housing (12) with an upper side (120) and a lower side (121),
**characterized in that**
the opening (11) extends from the upper side (120) to the underside and the slot-like opening (11) is formed for pushing the card (2) through from the upper side (120) to the underside (121) of the housing (12) along the pushing plane (E).

2. Device (1) according to claim 1,
**characterized in that**
the underside (121) around the opening (11) is designed to be at least partially flat in order to be arranged at the Slide-in opening on a card reader.

3. Device (1) according to claim 1 or 2,
**characterized in that**
at least one hole (13) for receiving the at least one earthing cable extends on the housing (12) in the thrust direction (S) of the opening (11).

## Revendications

1. Dispositif (1) pour décharger des cartes (2) chargées électrostatiquement, avec en tout cas un organe de décharge (10) conducteur électriquement, mis à la terre et/ou à mettre à la terre, au moyen duquel des charges électrostatiques sont évacuées à la surface d'une carte (2), le dispositif (1) comprenant un boîtier (12) sur lequel est prévue au moins une ouverture (11) en forme de fente pour l'introduction d'une carte (2) le long d'un ou de plusieurs plans de poussée (E) prédéfinis par l'ouverture en forme de fente (11), dans lequel, dans une ou plusieurs zones (B) le long du au moins un plan de poussée (E), le au moins un organe de décharge (10) est disposé et/ou orienté pour évacuer les charges électrostatiques dans une ou plusieurs zones (B) du plan de poussée (E), le dispositif comprenant un boîtier (12) avec une face supérieure (120) et une face inférieure (121),
**caractérisé en ce que**
l'ouverture (11) s'étend de la face supérieure (120) à la face inférieure et l'ouverture (11) en forme de fente est conçue pour faire passer la carte (2) de la face supérieure (120) à la face inférieure (121) du boîtier (12) le long du plan de poussée (E).

2. Dispositif (1) selon la revendication 1,
**caractérisé en ce que**
la face inférieure (121) est au moins partiellement plate autour de l'ouverture (11) pour être disposée a l'ouverture d'insertion sur un lecteur de cartes.

3. Dispositif (1) selon la revendication 1 ou 2,
**caractérisé en ce que**
au moins un alésage (13) s'étend sur le boîtier (12) dans la direction de poussée (S) de l'ouverture (11) pour recevoir l'au moins un câble de mise à la terre.
